Europäisches Patentamt

European Patent Office

Office européen des brevets

(19)

(11) Publication number: **0 136 877**

**A1**

(12) # EUROPEAN PATENT APPLICATION

(21) Application number: **84306529.3**

(22) Date of filing: **26.09.84**

(51) Int. Cl.⁴: **H 01 B 7/14**
**H 01 B 7/28**

(30) Priority: **04.10.83 NO 833598**

(43) Date of publication of application:
**10.04.85 Bulletin 85/15**

(84) Designated Contracting States:
**DE FR GB IT NL SE**

(71) Applicant: **International Standard Electric Corporation**
**320 Park Avenue**
**New York New York 10022(US)**

(72) Inventor: **Stenseth, Knut**
**Hammergt, 8**
**Oslo 4(NO)**

(72) Inventor: **Nossen, Per**
**Rodbergveien 14B**
**0591 Oslo 5(NO)**

(74) Representative: **Vaufrouard, John Charles**
**ITT Patent Department UK Maidstone Road Foots Cray**
**Sidcup KentDA14 5HT(GB)**

(54) Submarine cable.

(57) A submarine cable in which anodic devices (3, 7, 12) giving cathodic protection of the cable armour, are integrated with the cable armour (2, 6, 11). Arrangements are described for ensuring good and lasting electrical contact between the anodic wires, tapes and bands and the armour.

Fig . 1.

EP 0 136 877 A1

## SUBMARINE CABLE

This invention relates to a submarine cable of the kind comprising a cable core which is arranged within a protective sheath and provided with one or more layers of metallic armour. The armour is usually covered with a corrosion-protective layer of jute and/or polypropylene yarn impregnated with asphalt and/or bitumen. When the armour consists of steel wires or bands the steel is usually galvanised. Other metals have, however, also been used as cable armour. In connection with single conductor power cables, the conductivity of the steel armour has been improved by introducing wires of different metals into the armour.

An object of the invention is to provide an armoured submarine cable which is better protected from corrosion than conventional and well known cables.

According to the invention in its broadest aspect, a submarine cable of the kind referred to is characterised in that integrated into the armour there are arranged wires, bands or tapes of a metal or metal alloy which is less precious than that of the armour, and which will represent a sacrificial anode for corrosion protection of the armour.

With this invention there are obtained submarine cables, the armour of which will be capable of withstanding corrosion attacks from the environmental water for longer periods than usual.

Whereas it is well known to use sacrificial anodes for cathodic protection of metallic installations in sea water, the anodes have hitherto always been installed as devices separate from the object to be protected. One of the features of the present invention is therefore also that the sacrificial anodes are built into and form part of the object, i.e. the cable construction to be protected from corrosion.

Embodiments of the invention will now be described by way of example with reference to the accompanying drawings, in which:-

Figure 1 shows schematically a three phase submarine power cable provided with a two layer wire armour including sacrificial anodes,

Figure 2 shows schematically an alternative three phase submarine power cable with armour and sacrificial anodes, and

Figure 3 shows schematically a composite cable provided with anodic tapes or bands for protection of the armour.

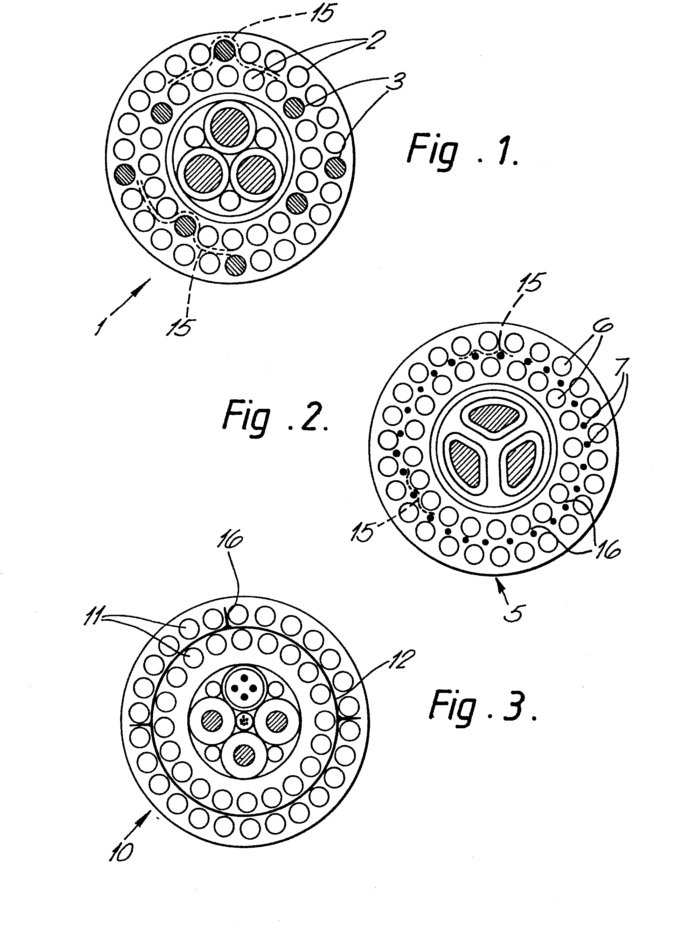

In Figure 1 is illustrated a three conductor cable 1 in which some of the armour wires 2 are replaced by wires 3 of a less precious metal, such as zinc or aluminium for steel armour or steel for copper armour. These wires may have the same or different cross-section or shape as compared with the armour wires.

In Figure 2 is illustrated an alternative three phase power cable 5 with two layers of armour 6 and wherein wires 7 or layers of wires 7 of anodic metal are placed between the two armour layers. These anodic wires may be placed in between the armour wire layers with the same direction of lay or the windings 7 may have a different or opposite direction and length of lay. Additionally or alternatively, the anodic wires may be placed as a layer underneath the innermost armour layer or on top of the outermost armour layer.

In Figure 3 is illustrated a composite cable 10 with armour 11 and anodic protective tapes or bands 12 in the form of overlapping or spaced windings or as longitudinally applied tape(s). The tape or band layers may be located similarly to those described in connection with the embodiment of Figure 2.

It should be noted that the drawings are not drawn to scale. The dimensions of the armouring/ sacrificial anode arrangement, and the cable cores are only shown schematically. Normally there will be metallic contact between neighbouring wires and layers, and in order to improve such contact in particular between the sacrificial anode wires 3, 7 and the neighbouring armour wires 2, 6 there may, as illustrated in Figure 1, be introduced wire, band or tape 15 continuously or at intervals. This wire, tape or band 15 should be of the same material as that of the armour. Alternatively or additionally, it could be arranged around one or more of the anodic wires, for instance as a braid.

As illustrated schematically in Figure 2 the anodic devices 7 may be electrically connected, at intervals, with one of the neighbouring armouring wires, by means of welding, soldering clamping or by other means, as indicated at 16.

Introduction of the bands, tapes 15 illustrated in Figure 1 and or the electrical connections 16 indicated in Figure 2 may for instance be done manually

- 4 -

during the armouring process when the machine is stopped for exchanging empty wire reels with full reels. So far as application of tapes and bands 15 is concerned, these may also be introduced with ordinary tape-winding apparatus. Welding, soldering or clamping as described may be used additionally or alternatively.

Whereas the illustrations show cables with double layer armour, the invention may, of course, also be used in connection with single layer armour. Furthermore, the three described alternatives of arranging anodic protection may be combined to provide the most efficient protection as may be required from case to case. It should also be understood that over the armour and anodic layers/wires there should be arranged conventional outer protection layers such as jute or polypropylene-yarn impregnated with asphalt, bitumen or the like. It should also be understood that the illustrated cable cores are shown by way of examples only and that these may be interchanged within the illustrated armour and anodic protection alternatives and that other cable cores may be protected by the defined armour. Such cable cores may contain electrical power conductors, telecommunication conductors, optical fibres, hoses for transport of fluids or gas/air.

It is considered important that the anodic devices (wires, tapes, bands) which are integrated in the cable construction, are so dimensioned as to provide efficient cathodic protection of the cable armouring for a desired period of time, say 30 years. The principle of cathodic protection is based on the table of galvanic series in sea water as known from any textbook of metals, these principles being that a metal A less precious than a metal B will, in sea water, act as a sacrificial anode for B.

- 5 -

To give additional protection the armour elements may be plated or covered, wholly or partly, with anodic material.

The amount of anodic material integrated into the armour is dimensioned on the basis of the following criteria:

- A predetermined remaining amount of anodic material when the life of the cable installation expires.
- The surface area of the armour.
- The necessary protective current to be delivered to the armour to provide polarisation. A known average current density given by the type of armour used and the rate at which the outer corrosion protection is destroyed, must be adjusted in accordance with the conditions of the cable route. These conditions include flow, type and corrosiveness of the sea bed sediments the concentration of oxygen and the resistivity of the sea water. The current density is also adjusted in accordance with constructional conditions such as burying procedures and other neighbouring structures which may be protected or not protected.
- The performance data of the anodic material, which in addition to the chemical composition, includes the relationship between the volume and surface area and arrangement of the anodic material within the armour construction.

- 6 -

CLAIMS:

1. Submarine cable of the kind comprising a cable core (1, 5, 10) which is arranged within a protective sheath and provided with one or more layers of metallic armour, characterised in that integrated into the armour (2, 6, 11) there are arranged wires, bands or tapes (3, 7, 12) of a metal or metal alloy which is less precious than that of the armour, and which will represent a sacrificial anode for corrosion protection of the armour.

2. Submarine cable according to claim 1, characterised in that in an armour consisting of one or more layers of metal wires, one or more of the armour wires is (are) replaced by sacrificial anode metal wires (3).

3. Submarine cable according to claim 1 or 2, characterised in that in an armour consisting of one or more layers of metal wires or the like there is arranged at least one layer of anodic wires (7) smaller than and/or of different shape from those of the armour, underneath the innermost armour layer, in between two armour layers or over the outermost armour layer, with the same or opposite direction of lay.

4. Submarine cable according to claims 1, 2 or 3, characterised in that in an armour consisting of one or more layers of metal wires or the like there is arranged at least one layer of anodic bands or tapes (12) underneath the innermost armour layer, in between two armour layers or over the outermost armour layer, with the same or opposite direction of lay.

5. Submarine cable according to claim 3 or 4, characterised in that the anodic wires, bands and tapes (3, 7, 12) are wound with a different length of lay relative to that of the armour (2, 6, 11).

6. Submarine cable according to claim 1, 2, 3 or 5, characterised in that there are arranged tapes or bands (15) of a material identical to that of the armour in electrical contact with the anodic wires and with at least some of the armour wires, continuously or discontinuously in the longitudinal direction of the cable.

7. Submarine cable according to any one of claims 1 to 6, characterised in that at intervals the anodic devices of the cable are soldered, welded, clamped or otherwise electrically connected (16) to neighbouring armouring wires.

8. Submarine cable according to any one of claims 1 to 7, characterised in that in the case of steel armour, the anodic devices are zinc or aluminium.

9. Submarine cable according to any one of claims 1 to 7, characterised in that in the case of copper armour, the anodic devices are steel, zinc or aluminium.

10. Submarine cable according to any one of claims 1 to 9, characterised in that the armour elements are plated or covered, wholly or partly, with anodic material.

11. Submarine cable substantially as described with reference to the accompanying drawings.

Fig . 1.

Fig . 2.

Fig . 3.

European Patent Office

**PARTIAL EUROPEAN SEARCH REPORT**
which under Rule 45 of the European Patent Convention
shall be considered, for the purposes of subsequent
proceedings, as the European search report

Application number

| | **DOCUMENTS CONSIDERED TO BE RELEVANT** | | EP 84306529.3 |
|---|---|---|---|

| Category | Citation of document with indication, where appropriate, of relevant passages | Relevant to claim | CLASSIFICATION OF THE APPLICATION (Int Cl.4) |
|---|---|---|---|
| X | GB - A - 1 502 938 (REYNOLDS) <br> * Fig. 2-7; page 2, line 130 - page 3, line 111 * <br> -- | 1,3,4, 7,9 | H 01 B 7/14 <br> H 01 B 7/28 |
| A | GB - A - 1 379 832 (PREFORMED) <br> * Page 1, lines 20-42; page 2, lines 11-26 * <br> -- | 1 | |
| X | GB - A - 2 037 060 (TEXAS) <br> * Fig. 1,2; page 1, line 104 - page 6, line 127 * <br> -- | 1,8-10 | |
| X | DE - A1 - 1 935 188 (GUTEHOFF-NUNGSHUTTE) <br> * Fig. 1; page 2, lines 5-20 * <br> -- | 1,2,9, 10 | |

TECHNICAL FIELDS SEARCHED (Int. Cl.4)

H 01 B

**INCOMPLETE SEARCH**

The Search Division considers that the present European patent application does not comply with the provisions of the European Patent Convention to such an extent that it is not possible to carry out a meaningful search into the state of the art on the basis of some of the claims.

Claims searched completely: 1-10
Claims searched incompletely: —
Claims not searched: 11
Reason for the limitation of the search:

Claim 11 does not define clearly the matter for which protection is sought (rule 29).

| Place of search | Date of completion of the search | Examiner |
|---|---|---|
| VIENNA | 15-11-1984 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

**PARTIAL EUROPEAN SEARCH REPORT**

Application number

EP 84306529.3

| | DOCUMENTS CONSIDERED TO BE RELEVANT | | CLASSIFICATION OF THE APPLICATION (Int Cl 4) |
|---|---|---|---|
| Category | Citation of document with indication, where appropriate, of relevant passages | Relevant to claim | |
| X | DE - C1 - 566 098 (SIEMENS)<br><br>* Fig. 1-6; page 1, line 35 - page 2, line 49 *<br><br>-- | 1-5,8 | |
| A | GB - A - 1 159 428 (B.I.C.C.)<br><br>* Fig. 1,2; claims 2,6; page 1, lines 29-31 *<br><br>-- | 5 | |
| X | DE - B1 - 1 025 957 (SUBMARINE)<br><br>* Fig. 2,3; column 3, line 42 - column 4, line 1 *<br><br>---- | 1,8,10 | |
| | | | TECHNICAL FIELDS SEARCHED (Int. Cl.4) |

EPO Form 1505.3 06.78